# EUROPEAN PATENT SPECIFICATION

(11) **EP 0 305 009 B1**
(45) Date of publication and mention of the grant of the patent: **27.10.1993**
(21) Application number: 88201798.1
(22) Date of filing: 24.08.1988
(51) Int. Cl.: G03B 21/62

(54) **Improved one-piece projection screen**
Einteiliger Projektionsschirm
Ecran unitaire de projection

(30) Priority: 28.08.1987 US 90487
(43) Date of publication of application: 01.03.1989
(73) Proprietor: Philips Electronics N.V., 5621 BA Eindhoven (NL)
(72) Inventor: Goldenburg, Jill Forer, NL-5656 AA Eindhoven (NL); Bradley, Ralph Hampton, NL-5656 AA Eindhoven (NL); Guerinot, William Francis, NL-5656 AA Eindhoven (NL); Mc Kechnie, Thomas Stewart, NL-5656 AA Eindhoven (NL)
(74) Representative: Peters, Rudolf Johannes

(56) References cited:
- EP-A- 0 118 951
- EP-A- 0 233 662
- GB-A- 2 072 376
- PATENT ABSTRACTS OF JAPAN, vol. 7, no. 286, 21st December 1983, (P-244)(1431);& JP-A-58160940
- PATENT ABSTRACTS OF JAPAN, vol.12, no. 199, 9th June 1988, (P-714)(3046);& JP-A-632031
- PATENT ABSTRACTS OF JAPAN, vol. 10, no. 264, 9th September 1986, (P-495)(2320);& JP-A-6190149
- PATENT ABSTRACTS OF JAPAN, vol.8, no. 204 (P-301)(1641), 18th September 1984;& JP-A-5988723

## Description

This invention relates generally to projection screens. More specifically, the present invention relates to rear projection screens capable of use in a projection television (PTV) display arrangement, and particularly to a a rear projection screen with a front side and a rear side for projection on said front side an image from an image source located at the rear side of the screen, which screen comprises a field lens for focusing light from said image source via a medium and a screen base.

Typical PTV display arrangements contain means for converting a television or a video signal into an optical image. The optical image is projected upon a screen for viewing by an observer. In the case where the projection distance is relatively small, such as in compact PTV systems, the prior art arrangements are deficient, as is explained in more detail below.

Some prior art arrangements have an inherent lower optical transmission efficiency near the outer edges of the screen or corner illumination problems, resulting in a "bright spot" in the center. An example of such a screen is described in GB-A 2 072 376. Transmission efficiency in a given area of the screen may be defined to be the ratio of the total amount of light which passes through that area of the screen to the total amount of incident light received by that area. Other prior art arrangements have attempted to improve the quality of the system by eliminating the bright spot effect. See, for example, the Article "Ultra Wide Viewing Angle Rear Projection Television Screen" by R. Bradley et al, in IEEE Transactions on Consumer Electronics, Vol. CE-31, No. 3, pp. 185-192(1985) which discloses a projection screen with a Fresnel lens acting as a collimating field lens. While this screen may have eliminated corner illumination problems, the overall efficiency of the screen and the contrast are reduced by the presence of the so-called riser surfaces of the Fresnel lens, especially those at the edges of the Fresnel structure. Additionally undesirable artifacts, such as Moiré interference patterns may be visible to the observer.

The Moiré effects and the light loss at the edges of the screen can be reduced by using a double Fresnel lens structure, as disclosed in the abstract of the Japanese Patent Application JP-A/61-90149. The screen of this document comprises a front plate with a lenticular light spreading surface and a rear Fresnel plate having both at its front side and at its rear side a Fresnel structure. In the screen of JP-A/61-90149 the image light has to traverse two additional surfaces, so that this screen suffers from additional transmission losses of the image light.

Accordingly, it is an object of this invention to provide an efficient projection screen without corner illumination deficiencies.

Another object of this invention is to provide a projection screen with improved overall efficiency and contrast.

A further object of this invention is to provide a projection screen which displays an image free of artifacts.

Yet another object of this invention is to provide a projection screen that achieves all of the above objects in a simple embodiment.

The foregoing and other objects of the present invention are realized in a projection screen according to claim 1. A one-piece projection screen is formed which splits the optical power of the screen's field lens between more than one surface, each surface preferably having a Fresnel lens structure. The index of refraction of the material between the surfaces (two in the preferred embodiment) is different from that of the mediums either upstream of the first surface, or downstream of the second surface.

The foregoing and other objects and features of the present invention will be apparent from the specification, the drawings and the two combined. The drawings (not drawn to scale) are briefly:
Figure 1 is a horizontal cross-sectional representation of a one-piece projection screen having a single Fresnel lens.
Figure 2 is a horizontal cross-sectional representation of a two-piece projection screen.
Figure 3 is a horizontal cross-sectional representation of the preferred embodiment of the one-piece projection screen of the present invention.
Figure 4 is a geometry for the field lens of the projection screen in figure 3.
Figure 5 is an expanded view of a portion of figure 4.

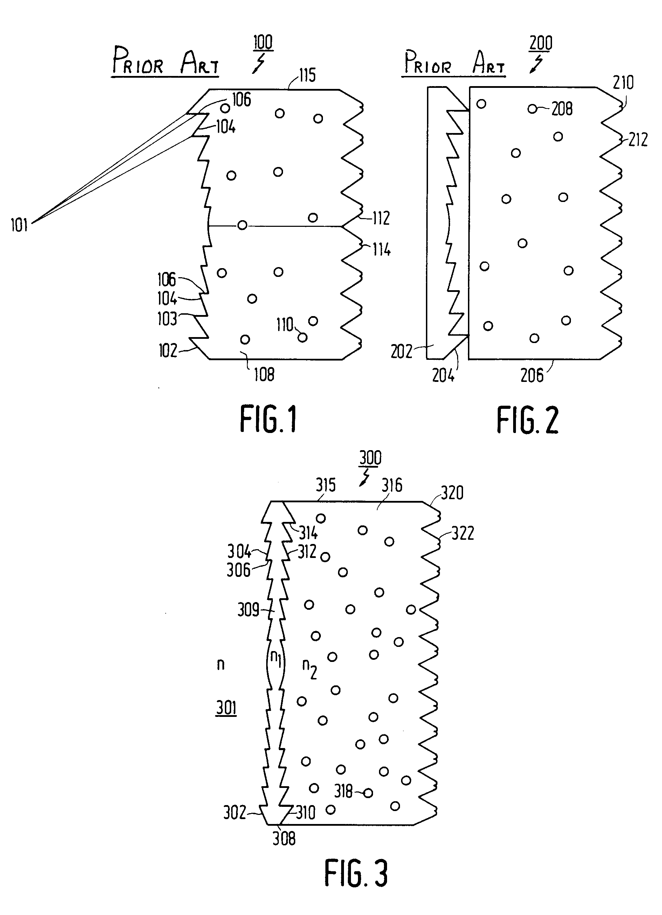

Figure 1 shows a projection screen 100 usable in, for example, a projection television (PTV) system. The rear side of the screen 100 is shaped to form a field lens, which field lens may have a short focal length, comparable to the diagonal size of the screen, typical of projection screens used in compact PTV systems. Light comprising the image to be displayed emanates from a projection lens or image source 101. The light rays from source 101 are converted to parallel rays by the field lens at the rear side 102 of the screen which is provided with a Fresnel lens structure with facets 103, comprising facet surfaces 104 and riser surfaces 106. The screen 100 may additionally contain a screen base 115 having a diffuser 108 with diffuser elements 110 which controls the spread of the light in the vertical direction to an angle of 11°, for example, and a lenticular array 112 containing lenticules 114 that permits efficient wide-angle viewing (a horizontal angle of 170° for example). The facets 103 refract light received from the source 110 to form the parallel or collimated rays that impinge upon the diffuser and lenticules.

While the facet surfaces 104 are primarily responsible for refraction in the Fresnel lens structure, the riser surfaces 106 primarily cause a loss of transmission efficiency of the screen 100 because light impinging on these surfaces is misdirected or lost. As can be seen from Figure 1, the facets 103 located at the perimeter of the Fresnel lens structure have larger riser surfaces than the facets 103 towards the center. This is a necessary limitation since the amount of refraction required to convert divergent rays from a small source of light into parallel rays at a given location on the Fresnel lens is directly proportional to the distance from the center of the lens to the given location.

Because the riser surfaces 106 are larger near the edges of the Fresnel lens structure, a greater portion of light is misdirected, resulting in decreased luminance near the edges, thus giving the lens a "bright spot" effect in its center.

The projection screen 200 in Figure 2 eliminates the edge luminance reduction problems of the projection screen 100 in Figure 1 by a separation of its field lens 202, which contains a Fresnel lens structure 204, from the remainder of the screen. The Fresnel lens structure 204 converts the rays from the light source into parallel rays just as the Fresnel lens structure at the rear side 102 of the screen shown in Fig. 1. However, the incidents of misdirected light are greatly reduced, so that no "bright spot" appears at the center. Two of the penalties associated with the embodiment of Figure 2 - and hence the drawbacks -are an approximate 16% reduction in the screen's transmission efficiency, because the light has to traverse two additional surfaces, and the introduction of disturbing artifacts, such as Moiré interference patterns, in the projected image. An embodiment of the projection screen according to the invention is shown in Fig. 3.

The projection screen 300 greatly reduces the edge luminance fall-off problem associated with the screen 100, shown in Fig. 1, while avoiding the large transmission efficiency loss penalty associated with the screen 200 shown in Fig. 2 and the number of disturbing artifacts. The screen 300 comprises a field lens 308 which contains two Fresnel lens surfaces 302 and 310. The field lens 308 is connected with its front surfaces 310 to the rear side of the screen base 315. The rear side of the screen base having a surface interlocking with the surface 310 of the field lens 308. The rear and front surfaces 302 and 310 of the field lens 308 are separated by a region 309 filled with a medium with an index of refraction (n₁) different from that of either the screen base 315 (n₂) or the incident medium 301 (n). The region 309 is for example filled with U.V. curing polymer having an index of refraction n₁ of approximately 1.59. The screen base 315 may be of polymethylmethacrylate (PMMA) material with n₂ approximately equal to 1.49.

The presence of the second Fresnel lens surface 310 has the effect of dividing the required optical power of the field lens 308 between the two Fresnel lens surfaces 302 and 310. Thus, the riser surfaces 306 are smaller than corresponding riser surfaces 106 in Figure 1, resulting in less misdirected light.

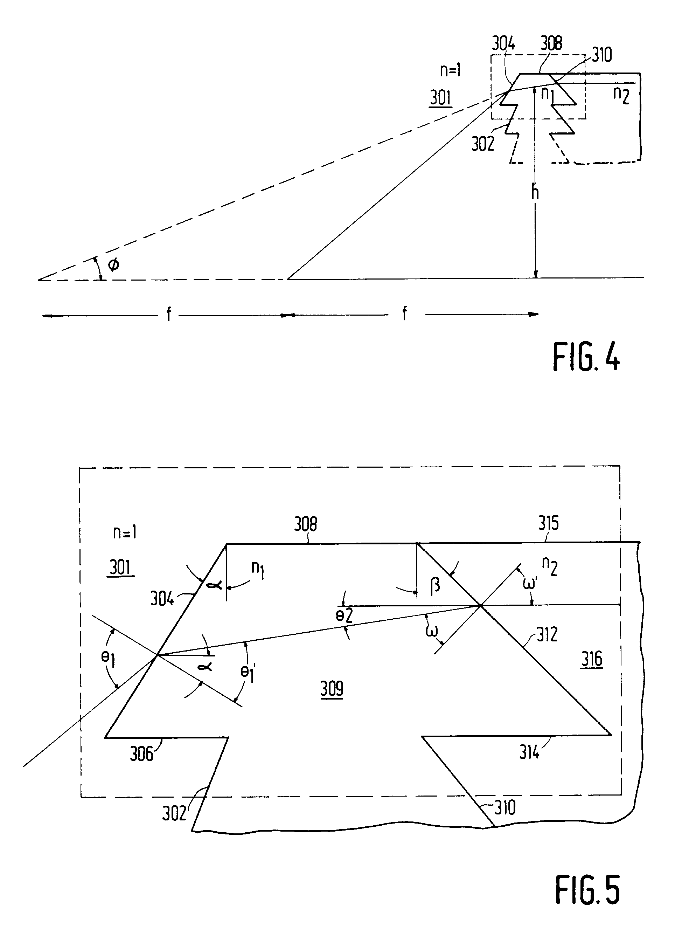

The facet angles of the two Fresnel lens surfaces 302 and 310 can be calculated as follows, with reference to Figures 4 and 5. In the preferred embodiment the optical power of the field lens 308 is evenly divided between surfaces 302 and 310, and the distance across the region 309 between the surfaces 302 and 310 is small and will be neglected in the following calculation. Therefore the optical power of each surface is 1/(2f), where f is the focal length of the field lens 308. The facet angle α of a facet on surface 302 is given by the following equation 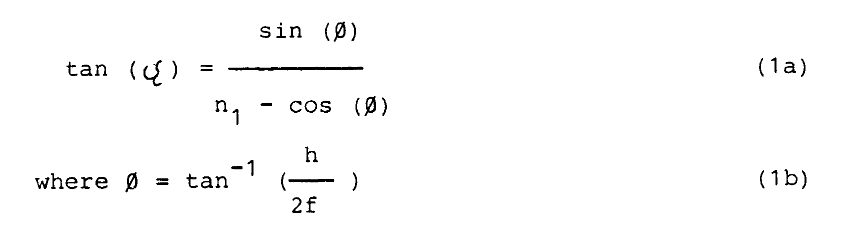
h being the distance from the optical center of the field lens 308 to the facet, and n₁ being the refractive index of region 309. A ray incident on facet surface 304 makes an angle ϑ₁, with the normal, such that 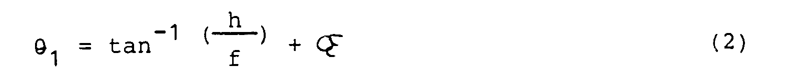
The angle ϑ₁ ′ of the refracted ray is found by using Snell's Law, and assuming the refractive index n of the incident medium 301 is equal to 1. 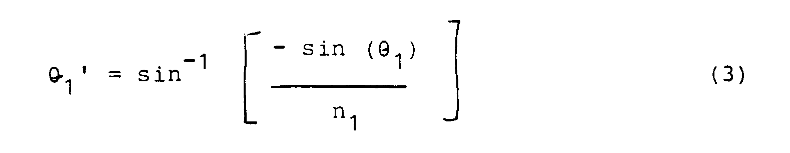
The angle ϑ₂ of the refracted ray measured with respect to the optical axis is given by

$\text{ϑ₂ = ϑ₁ ′ - α (4)}$

The angle of this ray with respect to normal of facet surface 312 is

$\text{ω = β - ϑ₂ ′ (5)}$

where the facet angle β is the angle needed to collimate the ray. Snell's Law predicts the refraction angle ω ′ as 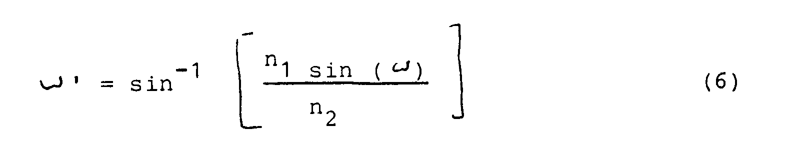
where n₂ is the refractive index for the region 316 of the screen base 315. To collimate the ray after refraction, ω ′ - β must equal zero. Therefore, 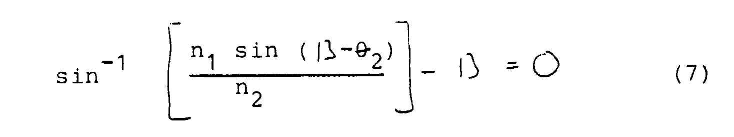
The facet angle β of facet surface 312 is calculated by a rearrangement of Equation (7). Thus, 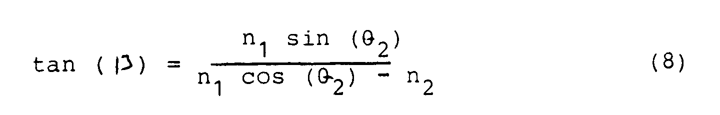
Using the above equations and the necessary data, facet angles for a one-piece projection screen with an embedded two-sided Fresnel lens as a field lens can be readily calculated. For example, if the focal length of the field lens is 99 cm (39 inches), the diagonal of the screen is 94 cm (37 inches), the maximum distance from the optical center to the facet being 47 cm, and n₁ and n₂ are 1.59 (for Polystyrene) and 1.49 (for PMMA) respectively, facet surface 304 will have an angle α of approximately 20° and facet surface 312 will have an angle β of approximately 62°.

Only about half of the light rays impinging upon the outermost riser surface 106 of the projection screen 100 shown in Fig. 1 impinge upon the corresponding riser surface 306 of the projection screen 300, thus the outer edge illumination problems are greatly reduced by the screen according to the invention.

With respect to the screen 200 shown in Fig. 2, the number of surfaces to be transferred by the light is reduced by one. As the difference of the refractive indices of the field lens material and the screen base material is moderate the amount of light lost due to reflection at this surface is greatly reduced relative to the amount of light lost at the surfaces between the field lens 202 and the screen base 206 of the screen 200 shown in Fig. 2. The transmission efficiency of the screen according to the invention exceeds that of the screen in Fig. 2 by approximately 8%.

Various modifications of the above-described invention will be apparent to those skilled in the pertinent art, and are intended to be within the scope of the present invention. For example, the projection screen embodying the present invention need not be limited to use in a PTV system, but may be used with other projection systems. Also, the optical power of the field lens need not be divided equally between the two surfaces, and may be divided between more than two surfaces with any desired ratio. Additionally, the optical power of the field lens need not be chosen to collimate the rays from the projection lens, but could convert the light from the image source into a less divergent beam or into a convergent beam.

The composition of the Fresnel lens is not limited to a particular material, and, rather than utilizing rotationally symmetrical Fresnel lenses, the present invention may utilize a field lens comprising cylindrical or linear Fresnel lenses. Such Fresnel lenses eliminate, or greatly reduce, Moiré-interference patterns in the projected image. Also, the present invention is functional even where the optical center of the Fresnel is vertically offset from the optical axis of the PTV display arrangement.

## Claims

1. A rear projection screen (300) with a front side and a rear side for projection on said front side of an image from an image source located at the rear side of the screen (300) which screen (300) comprises a field lens (308) for focusing light coming from said image source and reaching said field lens (308) via a medium (301) and a screen base (315), the field lens (308) having at least two refractive surfaces (302,310), said surfaces being Fresnel lens structures, characterized in that the front surface (310) of the at least two refractive surfaces (302,310) of the field lens (308) is directly connected over its entire surface (310) to the screen base (315), and in that the region (309) of the field lens (308) between said refractive surfaces (302,310) has a refractive index different from that of said screen base (315).

2. A rear projection screen according to Claim 1, characterized in that diffuser elements (318) are embedded in the screen base (315) for controlling the spread of the focused light in a first direction, and that a lenticular array (320) is coupled to the screen base (315) at the side opposite to the side on which the Fresnel lens structures (302,310) are arranged for wide-angle distribution of the light received from said diffuser elements (318) in a second direction perpendicular to said first direction.

3. A rear projection screen according to Claim 1 or 2, characterized in that the optical power of said field lens (308) is divided equally before said refractive surfaces (302,310).

## Patentansprüche

1. Rückprojektionsschirm (300) mit einer Vorderseite und einer Rückseite zum Projizieren eines Bildes aus einer Bildquelle an der Rückseite des Schirms (300) auf die Vorderseite, wobei der Schirm (300) eine Feldlinse (308) zum Fokussieren von Licht aus der Bildquelle enthält und die Feldlinse (308) über ein Medium (301) und eine Schirmbasis (315) erreicht, wobei die Feldlinse (308) wenigstens zwei Brechungsflächen (302, 310) enthält, die Fresnel-Linsenstrukturen sind, dadurch gekennzeichnet, daß die Vorderfläche (310) der wenigstens zwei Brechungsflächen (302, 310) der Feldlinse (308) über ihre ganze Fläche (310) mit der Schirmbasis (315) direkt verbunden ist, und daß der Bereich (309) der Feldlinse (308) zwischen Brechungsflächen (302, 310) einen abweichenden Brechungsindex von dem der Schirmbasis (315) besitzt.

2. Rückprojektionsschirm nach Anspruch 1, dadurch gekennzeichnet, daß Diffusorelemente (318) zum Steuern der Streuung des fokussierten Lichts in einer ersten Richtung in die Schirmbasis (315) eingebettet sind, und da)] eine Linsengruppe (320) mit der Schirmbasis (315) an der Seite gegenüber der Seite gekoppelt ist, auf der die Fresnel-Linsenstrukturen (302, 310) für Weitwinkelverteilung des Lichts aus den Diffusorelementen (318) in einer zweiten Richtung senkrecht zur ersten Richtung angeordnet sind.

3. Rückprojektionsschirm nach Anspruch 1 oder 2, dadurch gekennzeichnet, daß die optische Leistung der Feldlinse (308) vor den Brechungsflächen (302, 310) gleichermaßen verteilt ist.

## Revendications

1. Ecran de projection par l'arrière (300) comportant un côté avant et un côté arrière en vue d'une projection sur le côté avant d'une image provenant d'une source d'image située du côté arrière de l'écran (300), cet écran (300) comprenant une lentille de champ (308) pour focaliser la lumière provenant de la source d'image et atteignant la lentille de champ (308) via un milieu (301) et une base d'écran (315), la lentille de champ (308) comportant au moins deux surfaces réfringentes (302, 310), ces surfaces étant des structures de lentilles de Fresnel, caractérisé en ce que la surface avant (310) des au moins deux surfaces réfringentes (302, 310) de la lentille de champ (308) est reliée directement sur la totalité de sa surface (310) à la base d'écran (315), et que la région (309) de la lentille de champ (308) entre les surfaces réfringentes (302, 310) présente un indice de réfraction différent de celui de la base d'écran (315).

2. Ecran de projection par l'arrière suivant la revendication 1, caractérisé en ce que des éléments diffuseurs (318) sont noyés dans la base d'écran (315) pour contrôler les propagation de la lumière focalisée dans un premier sens, et un réseau lenticulaire (320) est couplé à la base d'écran (315) du côté opposé au côté sur lequel les structures de lentilles de Fresnel (302, 310) sont disposées en vue d'une répartition grand-angulaire de la lumière reçu des éléments diffuseurs (318) dans une seconde direction perpendiculaire à la première.

3. Ecran de projection par l'arrière suivant la revendication 1 ou 2, caractérisé en ce que la puissance optique de la lentille de champ (308) est divisée de manière égale avant les surfaces réfringentes (302, 310).
